# EUROPÄISCHE PATENTSCHRIFT

(11) **EP 3 104 502 B1**
(45) Veröffentlichungstag und Bekanntmachung des Hinweises auf die Patenterteilung: **06.02.2019**
(21) Anmeldenummer: 16172152.7
(22) Anmeldetag: 31.05.2016
(51) Int. Cl.: H02K 7/00, H02K 7/08, H02K 7/14, F16D 1/108, F16D 1/116, H02K 15/16

(54) **ANTRIEB**
DRIVE
ENTRAÎNEMENT

(30) Priorität: 10.06.2015 DE 102015210641
(43) Veröffentlichungstag der Anmeldung: 14.12.2016
(73) Patentinhaber: Baumüller Nürnberg GmbH, 90482 Nürnberg (DE)
(72) Erfinder: SCHIECK, Robert, 90475 Nürnberg (DE)
(74) Vertreter: FDST Patentanwälte

(56) Entgegenhaltungen:
- EP-A1- 0 586 991
- WO-A1-98/06581
- DE-U1-202012 102 722
- US-A1- 2011 309 055
- US-A1- 2014 050 522
- US-A1- 2014 209 323

## Beschreibung

Die Erfindung betrifft einen Antrieb mit einem Elektromotor, und mit einem angetriebenen Bauteil. Der Antrieb ist insbesondere Bestandteil einer Industrieanlage, zumindest jedoch ist der Antrieb für den Einsatz innerhalb einer Industrieanlage geeignet. Die Erfindung betrifft ferner einen Elektromotor.

Industrieanlagen weisen üblicherweise eine Vielzahl von Aktoren auf, mittels derer Werkstücke bearbeitet werden. Jeder dieser Aktoren wiederum umfasst einen Antrieb mit üblicherweise einem Elektromotor, an den ein weiteres Bauteil des Antriebs gekoppelt ist, wie z.B. eine Spindel oder eine Förderraupe, mittels derer das Werkstück bearbeitet wird oder aber Bestandteile des Werkstücks gefördert werden. Üblicherweise werden der Elektromotor von einem ersten Hersteller und das mittels des Elektromotors angetriebene Bauteil von einem zweiten Hersteller erstellt. Folglich ist es erforderlich, dass die Bestandteile des Elektromotors und des mittels des Elektromotors angetriebenen Bauteils im Bereich deren Kupplung miteinander aufeinander abgestimmt sind. Um möglichst viele Gleichteile bei der jeweiligen Fertigung verwenden zu können, ist es bekannt, diese Bestandteile zu standardisieren. Beispielsweise sind die Wellen innen bzw. außen verzahnt. Hierbei ist das maximal übertragbare Drehmoment aufgrund der Zahntiefe vorgegeben, welches zu der Kraft korrespondiert, die zu einer plastischen Verformung der Zähne führen.

Eine Alternative hierzu ist, eine Welle des Elektromotors an dessen Umfang mittels Schrauben mit einer Welle des angetriebenen Bauteils zu verschrauben. Hierfür weist sowohl der Elektromotor als auch das anzutreibende Bauteil an deren jeweiligen Welle freiendseitig einen sogenannten Lochkranz auf, in deren axial verlaufende Löcher eben die Schrauben eingefügt werden. Die Schrauben weisen einen vergleichsweise großen Abstand zur Rotationsachse des Elektromotors auf, sodass auch ein Übertrag eines vergleichsweise großen Drehmoments ermöglicht ist. Es ist hierbei jedoch zwingend erforderlich, dass der Elektromotor und das angetriebene Bauteil in axialer Richtung voneinander beabstandet sind, damit eine Montage der Schrauben ermöglicht ist. Infolgedessen ist der Bauraum des Antriebs erhöht. Auch ist eine Montage vergleichsweise zeitaufwändig, da jede dieser Schrauben separat montiert werden muss. Hierbei ist es erforderlich, jede dieser Schrauben mit einer zugehörigen Mutter zu versehen, wobei die beiden Lochkränze zwischen dem Schraubenkopf und der Mutter angeordnet ist. Um eine Beschädigung dieser Verbindung zu vermeiden, und dennoch eine vergleichsweise stabile Verbindung bereitzustellen, ist es erforderlich, dass die Schrauben bzw. die Mutter mit einem vorher bestimmten, definierten Drehmoment angezogen werden. Dies trägt signifikant zur benötigten Montagezeit bei. Auch muss das Material der Schraube auf dieses Drehmoment angepasst sein, da ansonsten eine plastische Verformung und folglich Beschädigung der Schraube erfolgen könnte, ein sogenanntes Abreißen der Schraube.

Aus EP 0 586 991 A1 ist die Verbindung zweier Rohre oder dergleichen bekannt, die beispielsweise zur Bohrung von Brunnen herangezogen werden. An die einander zugewandten Freienden der Rohre sind kronenartig ausgestaltete Kragen angeschweißt.

Aus WO 98/06581 A1 ist ein Zylinderantrieb für eine Rotationsdruckmaschine bekannt. Dieser weist einen Elektromotor und einen angetriebenen Zylinder auf. Der angetriebene Zylinder ist mittels einer Passfeder, einer Vielkeilwelle oder einer Kerbverzahnung verdrehgesichert.

DE202012102722U1 zeigt eine elektrische Motor-Vorrichtung mit einem innerhalb eines Gehäuses gelagerten Stator und einem Rotor, der um eine zumindest indirekt an dem Gehäuse gelagerte zentrale Welle drehbar gelagert ist.

Aus US 2014/0050522 A1 ist eine Verbindung für eine Erdbohrmaschine bekannt, die einen Motor mittels einer Verbindungsvorrichtung mit einem Bohrstrang verbindet. Eine Welle ist mit dem Motor verschweißt. Diese Welle weist zinnenförmige Aussparungen auf, die Stifte aufnehmen, die im Wesentlichen radial orientiert sind. Die Stifte selbst sind in Vertiefungen einer weiteren Welle angeordnet.
Aus US 2014/0209323 A1 ist eine elektrische Tauchpumpe bekannt, die insbesondere in der Gas- und Ölindustrie Verwendung findet. Hierbei ist vorgesehen, dass zwei Wellen mittels eines Kupplungsstücks verbunden werden. Das Kupplungsstück selbst ist im Wesentlichen hohlzylindrisch ausgestaltet.
US 2011/0309055 A1 zeigt eine Energieversorgung eines Schweißgeräts, die einen Motor aufweist. Der Motor umfasst eine Welle, die einen Generator zur Bereitstellung von elektrischem Strom antreibt.
Der Erfindung liegt die Aufgabe zugrunde, einen besonders geeigneten Antrieb sowie einen besonders geeigneten Elektromotor anzugeben, bei dem vorzugsweise eine Montagezeit verkürzt und insbesondere Herstellungskosten gesenkt sind. Hinsichtlich des Antriebs wird diese Aufgabe durch die Merkmale des Anspruchs 1 erfindungsgemäß gelöst. Vorteilhafte Weiterbildungen und Ausgestaltungen sind Gegenstand der Unteransprüche.
Der Antrieb weist einen Elektromotor mit einem eine Motorwelle umfassenden Rotor auf. Bei Betrieb rotiert hierbei die Motorwelle um eine Rotationsachse. Besonders bevorzugt ist die Motorwelle aus einem Metall erstellt, sodass ein vergleichsweise robuster Antrieb bereitgestellt ist. Der Elektromotor umfasst ferner einen Stator, der zweckmäßigerweise den Rotor umfangsseitig umgibt. Mit anderen Worten ist der Elektromotor ein Innenläufer. Der Antrieb weist ferner ein angetriebenes Bauteil auf, das eine Antriebswelle umfasst. Hierbei ist die Antriebswelle mit der Motorwelle gekoppelt, sodass die Antriebswelle mittels des Elektromotors angetrieben wird.

Der Antrieb ist beispielsweise ein Extruder, eine Spritzgießmaschine, eine Druckmaschine, ein Rundtisch, eine Presse, ein Wickler, eine Drahtziehmaschine oder eine Holzbearbeitungsmaschine, wobei das angetriebene Bauteil hierbei zweckmäßigerweise angepasst ist. Das angetriebene Bauteil ist beispielsweise eine Walze, ein Schneckenförderer oder eine sonstige Rolle. Der Elektromotor weist zweckmäßigerweise eine Nennleistung zwischen 3kW und 500kW auf, insbesondere zwischen 3kW und 200kW, oder aber zwischen 20kW und 350kW. Beispielsweise ist die Nenndrehzahl des Elektromotors zwischen 100 U/min und 1.000 U/min, zweckmäßigerweise zwischen 100 U/min und 500 U/min oder zwischen 350 U/min und 1.500 U/min. Der Elektromotor ist insbesondere vorgesehen und eingerichtet, ein Bestandteil einer Industrieanlage zu sein, wobei mittels des angetriebenen Bauteils zweckmäßigerweise ein mittels der Industrieanlage zu erstellendes oder zu bearbeitendes Werkstück zumindest teilweise bearbeitet wird, insbesondere mechanisch.

Die Antriebswelle ist mit der Motorwelle gekoppelt. Insbesondere ist hierfür die Motorwelle in direktem mechanischem Kontakt mit der Antriebswelle. Mittels eines ersten Verbindungselements ist eine Bewegung der Motorwelle bezüglich der Antriebswelle in axialer Richtung unterbunden. Mit anderen Worten sind die Motorwelle und die Antriebswelle mittels des ersten Verbindungselements gegen eine Bewegung in axialer Richtung relativ zueinander gesichert. Folglich ist es aufgrund des ersten Verbindungselements nicht möglich, die Motorwelle in axialer Richtung bezüglich der Antriebswelle zu verbringen. Geeigneterweise ist es aufgrund des ersten Verbindungselements nicht möglich, die Antriebswelle in axialer Richtung von der Motorwelle zu beabstanden, sofern diese in direktem mechanischem Kontakt sind. Insbesondere wird mittels des ersten Verbindungselements lediglich eine Bewegung in eine axiale Richtung unterbunden. Zumindest jedoch ist, sofern lediglich das erste Verbindungselement vorhanden ist, eine tangentiale Bewegung, also eine Rotationsbewegung, der Antriebswelle bezüglich der Motorwelle möglich. Beispielsweise wird mittels des ersten Verbindungselements zusätzlich eine Bewegung der Antriebswelle bezüglich der Motorwelle in radialer Richtung unterbunden.

Der Antrieb weist ferner ein zweites Verbindungselement auf, das zwischen der Motorwelle und der Antriebswelle angeordnet ist. Hierbei befindet sich das zweite Verbindungselement funktional und/oder räumlich zwischen der Antriebswelle und der Motorwelle. Mittels des zweiten Verbindungselements wird bei Betrieb eine Rotationsbewegung der Motorwelle an die Antriebswelle übertragen. Hierbei rotieren zweckmäßigerweise die Motorwelle und die Antriebswelle um die gleiche Rotationsachse. Beispielsweise ist die Motorwelle mit der Antriebswelle konzentrisch. Insbesondere wird mittels des zweiten Verbindungselements keine axiale Bewegung der Motorwelle bezüglich der Antriebswelle verhindert. Besonders bevorzugt wird sowohl mittels des ersten Verbindungselements als auch mittels des zweiten Verbindungselements eine radiale Bewegung der Motorwelle bezüglich der Antriebswelle unterbunden. Geeigneterweise ist das erste Verbindungselement von dem zweiten Verbindungselement beabstandet. Mit anderen Worten werden das erste Verbindungselement und das zweite Verbindungselement nicht mittels des gleichen Bauteils realisiert.

Aufgrund der Funktionstrennung der Befestigung ist es ermöglicht, die beiden Verbindungselemente auf deren jeweiligen Einsatzzweck hin zu optimieren. Hierbei ist mittels des ersten Verbindungselements lediglich eine Bereitstellung einer Steifigkeit in axialer Richtung erforderlich, wohingegen mittels des zweiten Verbindungselements lediglich eine vergleichsweise hohe Steifigkeit bezüglich einer tangentialen Verbringung der beiden Wellen zueinander erforderlich ist. Beispielsweise wird das Material der beiden Verbindungselemente hierauf angepasst, indem z.B. eine bestimmte Orientierung der hierfür verwendeten Materialien gewählt wird, sofern diese für eine Stabilität eine bestimmte Vorzugsrichtung aufweisen, beispielsweise aufgrund einer Kristallstruktur.

Beispielsweise ist die Geometrie der Verbindungselemente auf deren jeweiligen Einsatzzweck hingepasst. Auch ist es ermöglicht, die jeweiligen Verbindungselemente auf den angedachten Einsatzzweck hin speziell zu fertigen. So ist es beispielsweise möglich, das zweite Verbindungselement auf das mittels des Elektromotors aufgebrachte Drehmoment hin zu optimieren, und jeweils ein zu dem jeweiligen Elektromotor korrespondierendes zweites Verbindungselement zu wählen, ohne dass hierbei das erste Verbindungselement angepasst werden muss. Folglich ist eine Flexibilität für den Einsatz des Elektromotors erhöht. Auch ist eine Montage vereinfacht, da die beiden Verbindungsarten vergleichsweise einfach ausgeführt werden können. Bei der Montage muss lediglich überprüft werden, ob das jeweilige Verbindungselement dem Einsatzzweck entsprechend montiert ist. Mit anderen Worten muss bei dem ersten Verbindungselement lediglich überprüft werden, dass eine axiale Bewegung unterbunden ist, wohingegen bei dem ersten Verbindungselement nicht überprüft werden muss, ob eine Drehmomentübertragung möglich wäre. Dies erfolgt lediglich bei Überprüfung der korrekten Montage des zweiten Verbindungselements.

Vorzugsweise wird mittels des ersten Verbindungselementes sichergestellt, dass das zweite Verbindungselement zwischen der Motorwelle und der Antriebswelle verbleibt. Mit anderen Worten wird mittels des ersten Verbindungselements sichergestellt, dass weder die Motorwelle noch die Antriebswelle in axialer Richtung bezüglich des zweiten Verbindungselements verbracht werden kann. Falls das zweite Verbindungselement bei Betrieb beschädigt werden sollte, würde folglich kein Drehmoment mehr übertragen, jedoch ist aufgrund des ersten Verbindungselements die Motorwelle mit der Antriebswelle verbunden, was zu einer erhöhten Sicherheit führt.

Besonders bevorzugt ist die Motorwelle eine Hohlwelle. Mit anderen Worten ist die Motorwelle hohlzylindrisch ausgestaltet. Auf diese Weise ist eine Trägheit der Motorwelle vergleichsweise gering, sodass mittels des Antriebs eine vergleichsweise hohe Dynamik bereitgestellt ist. Infolgedessen sind sowohl das erste Verbindungselement als auch das zweite Verbindungselement von der Rotationsachse beabstandet. Somit ist eine Belastung des zweiten Verbindungselements auch bei einem hohen übertragenen Drehmoment vergleichsweise gering, weswegen auch eine vergleichsweise einfache Konstruktion des zweiten Verbindungselements herangezogen werden kann.

Insbesondere ist die Antriebswelle als eine Hohlwelle ausgestaltet, was wiederum zu einer erhöhten Dynamik des angetriebenen Bauteils aufgrund einer verringerten trägen Masse führt. Zudem ist ein Gewicht des angetriebenen Bauteils aufgrund der vergleichsweise leichten Antriebswelle realisiert. Besonders bevorzugt ist sowohl die Antriebswelle als auch die Motorwelle als Hohlwelle ausgestaltet, wobei zweckmäßigerweise der Außendurchmesser der Antriebswelle gleich dem Außendurchmesser der Motorwelle ist. Besonders bevorzugt ist der Innendurchmesser der Antriebswelle gleich dem Innendurchmesser der Motorwelle. Folglich ist es auch ermöglicht, durch die beiden Wellen hindurch weitere Bestandteile zu führen, wie beispielsweise Leitungen, oder aber durch die beiden Wellen eine Flüssigkeit oder dergleichen zu fördern. Alternativ hierzu wird ein Kühlmedium durch die Wellen gefördert, sodass auch ein Betrieb des Antriebs auch bei einer vergleichsweise hohen Umgebungstemperatur ermöglicht ist.

Das erste Verbindungselement umfasst eine Rastnocke mit einer ersten Rastfläche sowie einen Rasthaken. Der Rasthaken wiederum weist eine zweite Rastfläche auf. Im Montagezustand ist der Rasthaken mit der Rastnocke verrastet. Mit anderen Worten liegt der Hakenkopf an der Rastnocke an, wobei insbesondere ein direkter mechanischer Kontakt zwischen der Rastnocke und dem Hakenkopf realisiert ist. Hierbei liegt zweckmäßigerweise zumindest abschnittsweise die erste Rastfläche an der zweiten Rastfläche an. Mit anderen Worten ist mittels des ersten Verbindungselements eine Rastverbindung geschaffen und die Motorwelle ist mit der Antriebswelle verrastet. Insbesondere hintergreift der Rasthaken die Rastnocke. Beispielsweise weist der Rasthaken einen größeren Abstand zur Rotationsachse auf als die Rastnocke. Mit anderen Worten ist der Hakenkopf radial nach innen gerichtet. Auf diese Weise ist eine Beschädigung der Rastverbindung bei Betrieb ausgeschlossen, jedoch zumindest eine Wahrscheinlichkeit hierfür verringert. Auch ist eine vergleichsweise ebene Außenfläche der beiden Wellen im Bereich der Kopplung realisierbar, sodass eine Beschädigung von etwaigen, die beiden Wellen umgebenden Bauteilen ausgeschlossen werden
kann. Auf diese Weise wird somit ein Lager der Motorwelle oder ein die Motorwelle umgebender Stator vor einer Beschädigung aufgrund eines abstehenden Hakenkopfes oder aufgrund der Rastnocken geschützt.

Der Rasthaken ist ein Bestandteil der Motorwelle. Die Motorwelle umfasst an deren axialem Freiende auf Seiten der Antriebswelle eine erste Stufe, mittels derer der Rasthaken ausgebildet ist. Mit andern Worten ist der Innen- und/oder Außendurchmesser der Motorwelle entlang deren axialer Ausdehnung nicht konstant, sondern wird mittels der ersten Stufe verringert bzw. vergrößert. Hierbei ist zweckmäßigerweise der Außendurchmesser der Motorwelle in axialer Richtung konstant, und die erste Stufe ist zweckmäßigerweise mittels Vergrößerung des Innendurchmessers an dem Freiende realisiert. Mittels dieser ersten Stufe ist somit der Rasthaken bereitgestellt, an dessen Freiende sich der Hakenkopf befindet, der zweckmäßigerweise den Abschluss der Motorwelle in axialer Richtung bildet. Beispielsweise ist der Rasthaken mittels eines Hohlzylinders realisiert. Folglich ist lediglich ein einziger Rasthaken vorhanden. Mit anderen Worten ist mittels des Hohlzylinders ein einziger um die Rotationsachse umlaufende Rasthaken realisiert, der von der Rotationsachse beabstandet ist. Alternativ hierzu ist der mittels der ersten Stufe gebildete Hohlzylinder in axialer Richtung geschlitzt, weist also eine Anzahl axialer Schlitze auf, sodass eine Anzahl derartiger Rasthaken bereitgestellt ist.

Beispielsweise umfasst der Antrieb 2,3,4,5 oder mehr derartiger Rasthaken. Zweckmäßigerweise ist die Anzahl derartiger Rasthaken kleiner oder gleich 30,25 oder 20. Insbesondere ist die Anzahl derartiger Rasthaken zwischen 5 und 30, zwischen 10 und 29, und beispielsweise gleich 18. Auf diese Weise ist mittels des ersten Verbindungselements eine vergleichsweise stabile Befestigung der Motorwelle an der Antriebswelle in axialer Richtung realisiert, wobei ein erneutes Lösen mittels jeweils Lösen der einzelnen Rasthaken ermöglicht ist. Diese können entweder zeitgleich oder aber zeitlich hintereinander gelöst werden, was einen Kraftaufwand reduziert. Alternativ hierzu umfasst der Antrieb lediglich einen Rasthaken, der in tangentialer Richtung einer vergleichsweise geringen Ausdehnung aufweist oder aber zwei derartige Rasthaken, die bezüglich der Rotationsachse punktsymmetrisch angeordnet sind, was eine Unwucht vermeidet. Insbesondere sind sämtliche Rasthaken drehsymmetrisch bezüglich der Rotationsachse angeordnet, was ebenfalls eine Unwucht vermeidet. Zweckmäßigerweise ist der Rasthaken an weitere Bestandteile der Motorwelle angeformt. Vorzugsweise ist die Motorwelle einstückig ausgestaltet, was ein Lösen des Rasthakens von weiteren Bestandteilen der Motorwelle verhindert, auch bei einer vergleichsweise großen Belastung.

Sofern der Hakenkopfes radial nach innen gerichtet ist, wird zur Erstellung der Rastverbindung der Rasthaken zumindest partiell nach außen, also von der Rotationsachse weg verschwenkt. Auf diese Weise ist einerseits eine Montage als auch eine Demontage vergleichsweise einfach möglich. Insbesondere umfasst der Rasthaken eine tangential verlaufende Nut, also eine Nut, die insbesondere umfangsseitig in den Rasthaken eingebracht ist. Die Nut weist zweckmäßigerweise einen abgerundeten Querschnitt auf, und ist beispielsweise mittels eines Kreissegments gebildet. Die Nut befindet sich zweckmäßigerweise im Bereich der ersten Stufe, also am Schaft des Rasthakens, an dem dem Hakenkopf gegenüberliegenden Ende. Aufgrund der Nut ist Material abgetragen, sodass der Rasthaken zur Montage bzw. Demontage vergleichsweise einfach verschwenkt werden kann. Insbesondere befindet sich die Nut umfangsseitig der Motorwelle, also an deren Außenseite. Auf diese Weise ist es vergleichsweise einfach, eine Materialermüdung festzustellen. Auch ist mittels Einlegen von einem weiteren Bauteil, wie z.B. eines O-Rings, nach erfolgter Montage ein Verschwenken des Rasthakens vergleichsweise einfach zu unterbinden, sodass ein ungewolltes Lösen der Rastverbindung verhindert ist. Hierbei ist aufgrund der Nut ein axiales Verschieben des O-Rings bei geeigneter Wahl des Durchmessers des O-Rings verhindert, weswegen eine Beschädigung von weiteren Bestandteilen im Betrieb aufgrund eines losen O-Rings vermieden ist.

Vorzugsweise liegt im Montagezustand der Rasthaken freiendseitig an der Antriebswelle an. Auf diese Weise wird mittels der Anlage einerseits eine Bewegung der Antriebswelle weiter auf die Motorwelle zu in axialer Richtung vermieden. Mittels der Rastnocke und insbesondere mittels der beiden Rastflächen, wird dahingehend ein Ablösen der Antriebswelle von der Motorwelle in die entgegengesetzte Richtung unterbunden. Mit anderen Worten liegt der Rasthaken form- und/oder kraftschlüssig zwischen der Rastnocke und weiteren Bestandteilen der Antriebswelle an. Auf diese Weise ist auch eine Beschädigung des Rasthakens aufgrund weiterer Bauteile oder aber aufgrund von Schmutz oder sonstigen Bestandteilen unterbunden.

Die Antriebswelle umfasst die Rastnocke. Insbesondere ist die Rastnocke an weitere Bestandteile der Antriebswelle angeformt. Zweckmäßigerweise ist die Antriebswelle einstückig und/oder aus einem Metall erstellt. Auf diese Weise ist der Antrieb vergleichsweise robust. Da die Antriebswelle die Rastnocke aufweist, ist eine nachträgliche Bearbeitung einer bereits vorhandenen Antriebswelle zur Bereitstellung des ersten Verbindungselements des Antriebs auch nach Herstellung der Antriebswelle möglich. Mit anderen Worten kann mit einem Elektromotor, der den Rasthaken aufweist, im Wesentlichen jedes beliebige angetriebene Bauteil kombiniert werden. Hierfür ist lediglich eine nachträgliche Bearbeitung der Antriebswelle zur Ausbildung der Rastnocke erforderlich, was beispielsweise mittels einer Drehbank oder dergleichen realisierbar ist. Hierfür wird lediglich Material abgetragen, wobei ein bestimmter Teil des Materials zur Bereitstellung der Rastnocke an der Antriebswelle belassen werden kann.

Zweckmäßigerweise weist die Rastnocke radial nach außen, was eine nachträgliche Bearbeitung weiter vereinfacht. Die Antriebswelle umfasst in axialer Richtung an deren der Motorwelle zugewandten Freiende eine zweite Stufe. An der zweiten Stufe ist die Rastnocke angebunden. Insbesondere ist die zweite Stufe mittels einer Reduzierung des Außendurchmessers der Antriebswelle realisier. Zum Beispiel umfasst der Antrieb sowohl die erste als auch die zweite Stufe, die im Montagezustand komplementär aneinander anliegen, mit Ausnahme der jeweils für die Rasthaken bzw. die Rastnocke benötigten Aussparungen. Insbesondere liegen hierbei die beiden Stufen stumpf aneinander an.

Beispielsweise ist die erste Rastfläche und/oder die zweite Rastfläche im Wesentlichen senkrecht zur axialen Richtung. Auf diese Weise ist die Antriebswelle gegen eine axiale Bewegung bezüglich der Motorwelle auch bei einer vergleichsweise großen Belastung gesichert. Beispielsweise sind die erste und zweite Rastfläche zueinander parallel, und im Montagezustand liegt zumindest eine der Rastflächen im Wesentlichen vollständig an der weiteren Rastfläche an. Folglich ist mittels des ersten Verbindungselements ein Aufbringen von vergleichsweise großen Kräften zur axialen Sicherung möglich.

Besonders bevorzugt ist die erste Rastfläche bezüglich der zweiten Rastfläche geneigt. Insbesondere ist die jeweilige Rastfläche bezüglich einer tangentialen Ebene verkippt. Mit anderen Worten liegen die beiden Rastflächen im Montagezustand nicht vollflächig aneinander an. Beispielsweise ist die zweite Rastfläche senkrecht zur axialen Richtung, wohingegen die erste Rastfläche mit der zweiten Rastfläche einen Winkel zwischen 0° und 15°, 2° und 10° und beispielsweise 5° einschließt. Hierbei ist das radial äußere, dem Rasthaken zugewandte Ende der ersten Rastfläche in Richtung der Motorwelle versetzt. Mit anderen Worten ist dieses Freiende der ersten Rastfläche in Richtung der Motorwelle versetzt. Aufgrund der Neigung ist eine Erstellung der Rastverbindung vereinfacht. Ferner ist mittels der Neigung ein Ausgleich von Fertigungstoleranzen ermöglicht. Sofern die Motorwelle und die Antriebswelle unterschiedliche Wärmekoeffizienten aufweisen, wird bei einer Erwärmung und einer folglichen unterschiedlichen Ausdehnung in axialer Richtung aufgrund der Neigung der beiden Rastflächen zueinander ein Ausgleich bereitgestellt, weswegen eine vergleichsweise geringe mechanische Spannung entsteht. Folglich ist der Antrieb auch über einen vergleichsweise hohen Temperaturbereich betreibbar. Aufgrund der Neigung wird insbesondere eine Vorspannung auf die erste Stufe ausgeübt, sofern diese vorhanden ist, weswegen trotz Fertigungstoleranzen kein Spalt zwischen den beiden Rastflächen oder aber im Bereich der ersten Stufe verbleibt. Folglich ist die Verbindung spielfrei ist.

Vorteilhafterweise wird die Motorwelle mittels Lagern des angetriebenen Bauteils gelagert. Insbesondere ist der Elektromotor lagerlos. Zweckmäßigerweise ist der Stator des Elektromotors an dem angetriebenen Bauteil befestigt, beispielsweise mittels Schrauben. Infolgedessen ist eine Reibung reduziert und auch Herstellungskosten verringert. Vor der Montage des Elektromotors an dem angetriebenen Bauteil ist insbesondere eine Montageplatte an dem Stator befestigt, mittels derer der Rotor von dem Stator beabstandet wird, um eine ordnungsgemäße Montage zu gewährleisten, und um eine Beschädigung des Stators aufgrund des Rotors zu vermeiden. Nach erfolgter Montage der Motorwelle an der Antriebswelle wird die Montageplatte entfernt und folglich der Motor frei gegeben.

Zweckmäßigerweise weist das erste Verbindungselement einen größeren Abstand zur Rotationsachse auf als das zweite Verbindungselement. Folglich ist das erste Verbindungselement von außen zugänglich, sodass eine etwaige Demontage erleichtert ist. Das zweite Verbindungselement umfasst bevorzugt einen Stift, also insbesondere einen Zylinder. Der Durchmesser des Stifts ist beispielsweise geringer als die Dicke der Motor- und/oder Antriebswelle, sofern diese als Hohlwelle ausgestaltet sind. Der Stift liegt teilweise in einer ersten axialen Aussparung und teilweise in einer zweiten axialen Aussparung ein. Die erste axiale Aussparung ist hierbei in die Motorwelle und die zweite axiale Aussparung ist in die Antriebswelle eingebracht. Die Aussparungen sind besonders bevorzugt nach Art eines Sacklochs ausgestaltet und weisen folglich einen Boden auf. Infolgedessen ist ein axiales Verschieben des Stifts verhindert, sodass dieser stets im Eingriff sowohl mit der Motorwelle als auch mit der Antriebswelle ist. Beispielsweise ist die erste und/oder zweite axiale Aussparung nach Art einer Bohrung gestaltet, was zu einer vergleichsweise einfachen Herstellung führt. Beispielsweise ist die axiale Ausdehnung der ersten und/oder zweiten axialen Aussparung geringer als 100mm, 50mm oder 20mm. Zweckmäßigerweise ist die axiale Ausdehnung der ersten und/oder zweiten axialen Aussparung größer als 0,05mm, 5mm oder 10mm.

Insbesondere weist der Stift einen Abstand zur Rotationsachse auf. Beispielsweise ist zwischen zumindest einer der Aussparungen, vorzugsweise zwischen beiden Aussparungen, und dem Stift ein Form- und/oder Kraftschluss realisiert. Zweckmäßigerweise ist der Stift unter Spielpassung axial in die erste bzw. zweite axiale Aussparung eingeführt. Insbesondere befindet sich die erste und/oder zweite axiale Aussparung im Bereich der jeweiligen Stufe, sofern diese vorhanden ist. Infolgedessen ist eine Montage vereinfacht. Beispielsweise ist die erste und/oder zweite axiale Aussparung stirnseitig in die jeweilige Welle eingebracht. Insbesondere ist der Stift aus einem Metall gefertigt, beispielsweise Edelstahl. Insbesondere umfasst der Antrieb eine Anzahl derartiger Stifte, von denen jeder in einer zugeordneten ersten Aussparung und in einer zweiten Aussparung einliegt. Mit anderen Worten umfasst die Motorwelle eine zu der Anzahl der Stifte korrespondierende Anzahl von ersten Aussparungen, und die Antriebswelle eine zu der Anzahl der Stifte korrespondierende Anzahl an zweiten axialen Aussparungen. Vorzugsweise umfasst der Antrieb zwischen 5 derartigen Stifte und 20 derartigen Stifte, zwischen 10 derartigen Stifte und 15 derartigen Stifte und beispielsweise 12 derartige Stifte. Insbesondere umfasst der Antrieb eine zu der Anzahl an Rasthaken korrespondierende Anzahl an Stiften, sofern das erste Verbindungselement derartige Rasthaken aufweist. Hierbei sind die Stifte jeweils tangential zwischen benachbarten Rasthaken bevorzugt angeordnet. Anstatt des Stifts bzw. des Stifts weist der Antrieb beispielsweise eine Passfeder bzw. eine Anzahl an Passfedern auf. In einer Alternative hierzu weist das zweite Verbindungselement ein an der Motorwelle oder der Antriebswelle angeformten Vorsprung oder dergleichen auf, der unter Ausbildung eines Formschluss im Montagezustand in einer korrespondierenden Aufnahme der Antriebswelle bzw. der Motorwelle einliegt.

Der Elektromotor ist bevorzugt Bestandteil eines Antriebs einer Industrieanlage und umfasst einen Rotor mit einer Motorwelle. Die Motorwelle umfasst ein erstes Verbindungselement und ein zweites Verbindungselement, oder aber ist vorgesehen und eingerichtet, mit einem ersten bzw. zweiten Verbindungselement verbunden zu werden. Alternativ hierzu umfasst der Elektromotor zumindest einen Bestandteil des ersten und/oder zweiten Verbindungselements. Das erste Verbindungselement ist vorgesehen und eingerichtet, wenn der Elektromotor an einem angetriebenen Bauteil mit einer Antriebswelle montiert ist, die Motorwelle gegen eine axiale Bewegung bezüglich der Antriebswelle zu sichern. Das zweite Verbindungselement ist vorgesehen und eingerichtet, eine Rotationsbewegung der Motorwelle um eine Rotationsachse auf die Antriebswelle zu übertragen, sodass diese ebenfalls um die Rotationsachse rotiert. Mit anderen Worten wird mittels des zweiten Verbindungselements ein Drehmoment übertragen. Zweckmäßigerweise ist mittels des ersten Verbindungselements kein Drehmomentübertragen möglich. Die Erfindung betrifft ferner eine Verbindung zwischen zwei Wellen, insbesondere einer Motorwelle und einer Antriebswelle. Die beiden Wellen sind mittels eines ersten Verbindungselements und eines zweiten Verbindungselement miteinander gekoppelt. Hierbei wird mittels des ersten Verbindungselements eine axiale Bewegung der beiden Wellen zueinander unterbunden, also die beiden Wellen gegen eine axiale Bewegung bezüglich zueinander gesichert. Mittels des zweiten Verbindungselements wird eine Rotationsbewegung von einer der beiden Wellen auf die verbleibende Welle übertragen. Zweckmäßigerweise wird mittels des zweiten Verbindungselements keine axiale Bewegung der beiden Wellen zueinander verhindert.

Nachfolgend wird ein Ausführungsbeispiel der Erfindung anhand einer Zeichnung näher erläutert. Darin zeigen:
- Fig. 1: schematisch vereinfacht einen Antrieb mit einem angetriebenen Bauteil und einem Elektromotor,
- Fig. 2: perspektivisch den Elektromotor von einer B-Seite,
- Fig. 3: perspektivisch den Elektromotor von einer A-Seite,
- Fig. 4: perspektivisch, in einem axialen Längsschnitt den Elektromotor sowie ein Freiende einer Antriebswelle,
- Fig. 5: in einer Schnittdarstellung die mit der Motorwelle gekoppelte Antriebswelle, und
- Fig. 6: perspektivisch, in einer weiteren axialen Schnittdarstellung ausschnittsweise die beiden gekoppelten Wellen.

Einander entsprechende Teile sind in allen Figuren mit den gleichen Bezugszeichen versehen.

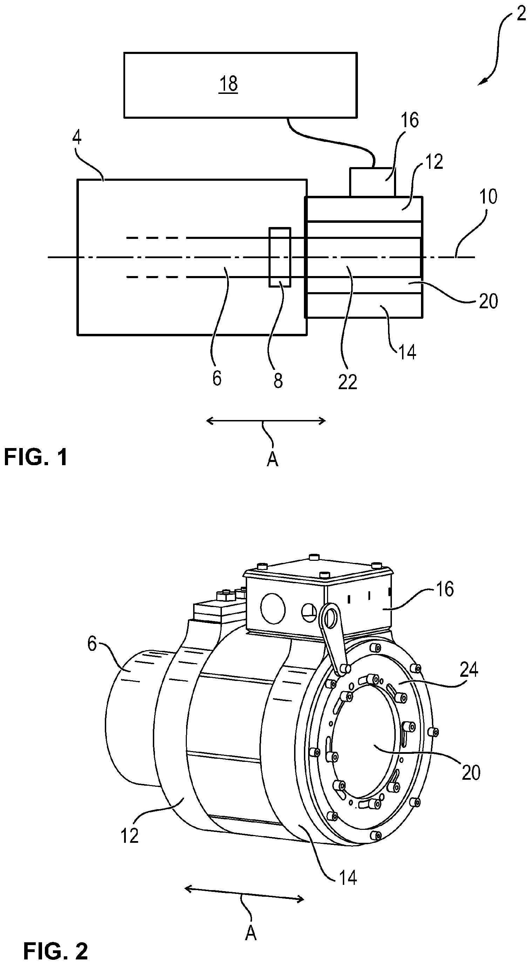

In Fig. 1 ist ein Antrieb 2 einer Industrieanlage dargestellt, mittels dessen Kunststoffspritzgussteile erstellt werden. Hierfür umfasst der Antrieb 2 ein angetriebenes Bauteil 4, das eine Antriebswelle 6 aufweist, die mittels Lagern 8, von denen lediglich eines dargestellt ist, drehbar um eine Rotationsachse 10 gelagert ist. An der als Hohlwelle ausgestalteten Antriebswelle 6 ist eine nicht näher dargestellte Förderschnecke angebunden, mittels derer bei Betrieb verflüssigter Kunststoff in Formen gepresst wird. An dem angetriebenen Bauteil 4 ist stirnseitig ein Elektromotor 12 angebunden, der einen hohlzylindrischen Stator 14 mit einer Anzahl nicht näher dargestellter Elektromagneten umfasst. Die Elektromagneten werden mittels einer Elektronik 16 bestromt, die ihrerseits von einer Prozesssteuerung 18 gesteuert wird. In der Prozesssteuerung 18 sind Parameter abgespeichert, die für den Betrieb des Antriebs 2 zur Erstellung von Kunststoffspritzteilen benötigt werden.

Innerhalb des Stators 14 des Elektromotors 12 ist ein Rotor 20 mit einer Anzahl an Permanentmagneten angeordnet, wobei der Rotor 20 von dem Stator 14 radial beabstandet ist. Der Rotor 20 weist ferner eine Motorwelle 22 auf, die mit der Antriebswelle 6 in axialer Richtung A an die Antriebswelle 6 gekoppelt. Mit anderen Worten geht die Antriebswelle 6 in die Motorwelle 22 über. Folglich entspricht auch die Rotationsachse 10 der Antriebswelle der Rotationsachse der Motorwelle 22. Die axiale Richtung A selbst ist parallel zur Rotationsachse 10. Die Motorwelle 22 ist hierbei ebenfalls als Hohlwelle ausgestaltet, und der Außendurchmesser der Antriebswelle 6 entspricht dem Außendurchmesser der Motorwelle 22. Aufgrund der Befestigung ist keine eigene Lagerung der Motorwelle 22 erforderlich. Dies erfolgt vielmehr mittels der Lager 8 des angetriebenen Bauteils 4. Folglich ist der Elektromotor 12 lagerlos.

In Fig. 2 ist der Elektromotor 12 von einer B-Seite dargestellt. Mit anderen Worten ist der Elektromotor 12 in axialer Richtung A von der Seite gezeigt, die von dem angetriebenen Bauteil 4 beabstandet ist. Hierbei ist im Montagezustand an der B-Seite beispielsweise ein Drehgeber an der Motorwelle 22 befestigt. Nach Fertigung des Elektromotors 12, jedoch vor Erstellung des Antriebs 2, ist eine Montageplatte 24 an dem Stator 14 befestigt und liegt teilweise in dem zwischen dem Stator 14 und dem Rotor 20 gebildeten Luftspalt ein. Mittels der Montageplatte 24 wird der Rotor 20 von dem Stator 14 beabstandet, sodass auch ein Transport des Elektromotors 12 möglich ist, ohne dass der aufgrund der Lagerlosigkeit ansonsten frei bewegliche Rotor 20 den Stator 14 schädigen würde. Nach vollständiger Montage des Elektromotors 12 an dem angetriebenen Bauteil 4 und Anbindung der Motorwelle 22 an der Antriebswelle 6 wird die Montageplatte 24 entfernt und folglich der Rotor 20 freigegeben. Hierbei wird mittels der Lager 8 des angetriebenen Bauteils 4 sichergestellt, dass der Rotor 20 auch im Betrieb des Antriebs 2 von dem Stator 14 beabstandet bleibt.

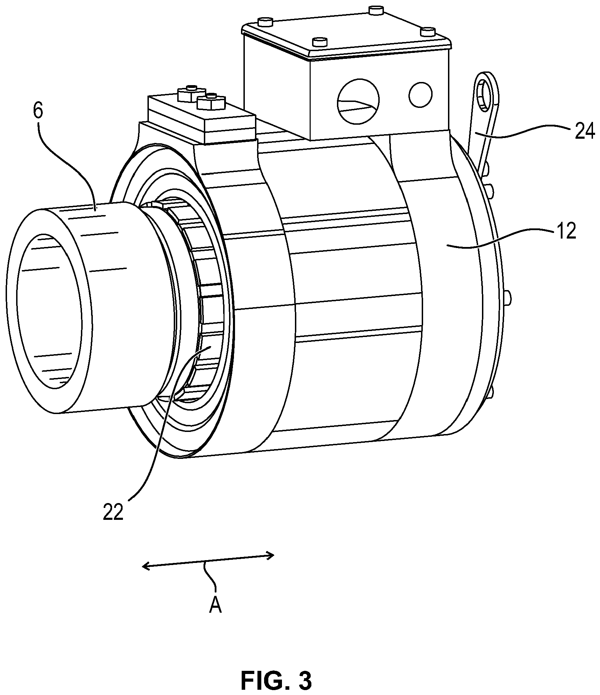

In Fig. 3 ist perspektivisch der Elektromotor 12 von derjenigen Seite gezeigt, an der das angetriebene Bauteil 4 befestigt wird. Ferner ist die als Hohlwelle ausgestaltete Antriebswelle 6 des angetriebenen Bauteils 4 dargestellt, die zur Montage in axialer Richtung A teilweise in die Motorwelle 22 geführt wird.

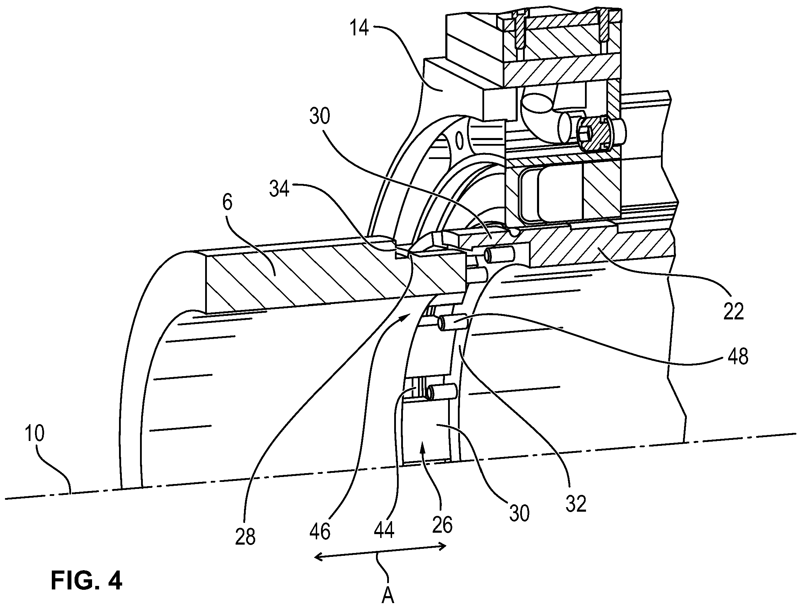

In Fig. 4 ist der Antrieb 2 in einem Schnitt entlang der Rotationsachse 10 ausschnittsweise dargestellt. Der Antrieb 2 umfasst ein erstes Verbindungselement 26, mittels dessen die Antriebswelle 6 und die Motorwelle 22 verbunden werden. Das erste Verbindungselement 26 umfasst zwanzig Rastnocken 28 sowie eine hierzu korrespondierende Anzahl an Rasthaken 30, die jeweils drehsymmetrisch bezüglich der Rotationsachse 10 verteilt sind. Die Rastnocken 28 und Rasthaken 30 sind jeweils gleichartig aufgebaut.

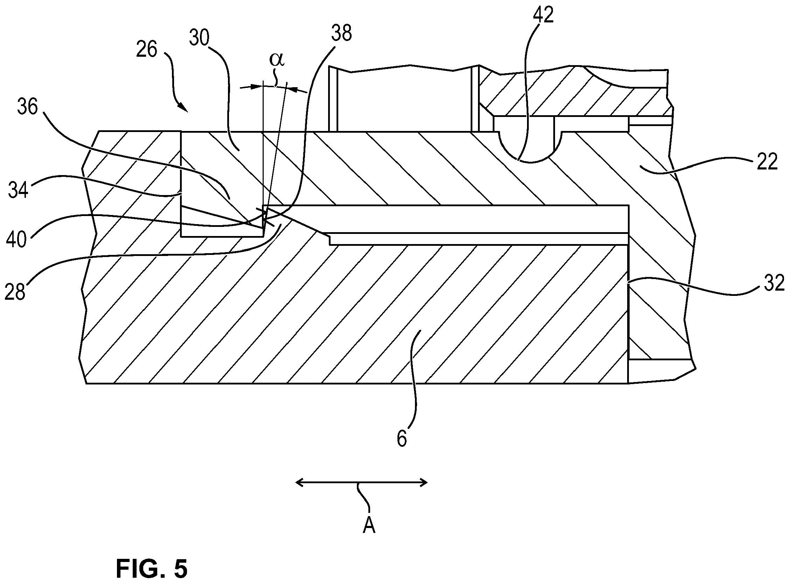

In Fig. 5 ist exemplarisch einer der Rasthaken 30 im Eingriff mit einer der Rastnocken 28 in einer Schnittdarstellung dargestellt, sodass die Antriebswelle 6 an der Motorwelle 22 befestigt ist. Jeder der Rasthaken 30 ist Bestandteil der Motorwelle 22, die zur Ausbildung der Rasthaken 30 eine erste Stufe 32 aufweist. Hierfür ist die Motorwelle 22 an deren innerem Umfang ausgespart, sodass der Innendurchmesser an dem dem angetriebenen Bauteil 4 zugewandten axialen Ende vergrößert ist. Die Antriebswelle 6 ist an deren äußeren Umfang an dem dem Elektromotor 12 zugewandten Freiende zur Bildung einer zweiten Stufe 34 ausgespart. Hierbei ist der Außenradius der Antriebswelle 6 in diesem Bereich verringert. Die beiden Wellen 6,22 liegen im Bereich der beiden Stufen 32,34 stirnseitig aneinander an, und die beiden Wellen 6,22 fluchten an deren Umfang miteinander, sodass eine vergleichsweise glatte Oberfläche erstellt ist. Der Rasthaken 30 weist einen Hakenkopf 36 mit einer zweiten Rastfläche 38 auf, die senkrecht zur Axialrichtung A ist. Die Rastnocke 28 weist eine erste Rastfläche 40 auf, die mit der zweiten Rastfläche 28 einen Winkel a einschließt. Mit anderen Worten ist die erste Rastfläche 40 bezüglich der zweiten Rastfläche 38 verkippt, also geneigt. Der Rasthaken 30 weist ferner im Bereich der ersten Stufe 32 an deren radial außen liegender Oberfläche eine tangential verlaufende Nut 42 mit im Wesentlichen halbrundem Querschnitt auf. Zwischen jeweils benachbarten Rasthaken 30 ist ein Schlitz 44 gebildet, was eine elastische Verformung der jeweiligen Rasthaken 30 erleichtert.

Bei Montage wird die Motorwelle 22 über die Antriebswelle in axialer Richtung A geschoben, bis der Rasthaken 30 freiendseitig an der Rastnocke 28 anliegt. Mittels Druckausübung wird der Rasthaken 30 aufgrund der als Filmscharnier wirkenden Nut 42 radial nach außen verschwenkt und der Hakenkopf 36 in axialer Richtung A über die Rastnocke 28 geführt. Sobald der Hakenkopf 36 die Rastnocke 28 überwunden hat, wird dieser aufgrund der elastischen Eigenschaften des Materials der Motorwelle 22 erneut radial nach innen bewegt und die erste und zweite Rastfläche 40,38 liegen aufgrund des Winkels a abschnittsweise aneinander an. Eine weitere Bewegung der beiden Wellen 6,22 in axialer Richtung A wird aufgrund der freiendseitigen Anlage des Rasthakens 30 an der Antriebswelle 6 im Bereich der zweiten Stufe 34 unterbunden. Mittels des ersten Verbindungselements 26 sind somit die Motorwelle 22 und die Antriebswelle 6 in axialer Richtung A gegen eine Bewegung gesichert.

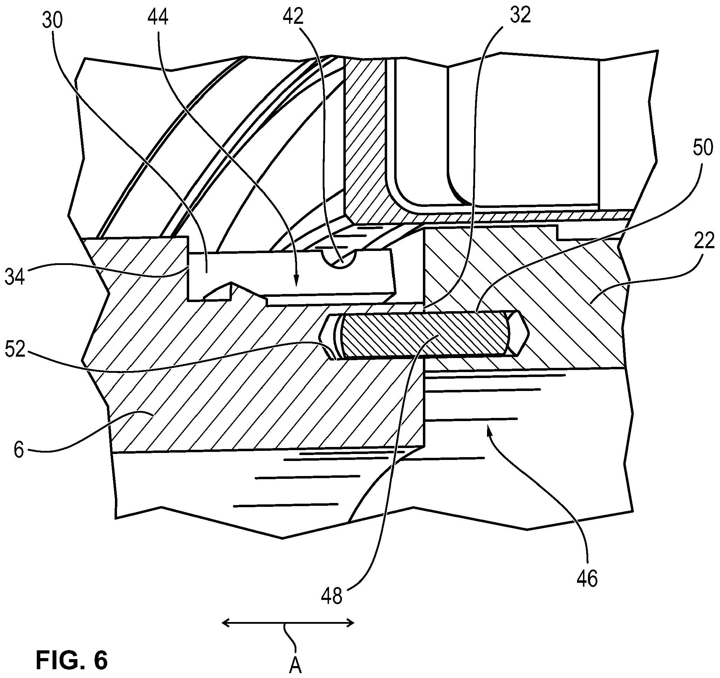

Der Antrieb 2 umfasst ferner ein zweites Verbindungselement 46, das zwanzig gleichartig Stifte 48 aus einem Edelstahl umfasst. Einer der Stifte 48 ist in Fig. 6 in einer Schnittdarstellung des Antriebs 2 entlang der Rotationsachse 10, jedoch im Vergleich zu dem in Fig. 5 gezeigten Schnitt um einen Winkel versetzt dargestellt. Jeder der Stifte 48 ist sowohl teilweise in einer ersten axialen Aussparung 50 als auch in einer zweiten axialen Aussparung 52 angeordnet, wobei zwischen dem Umfang des Stifts 48 und der jeweiligen Aussparung 50,52 umfangsseitig ein Formschluss erstellt ist. Jede der beiden axialen Aussparungen 50,52 ist mittels eines in axialer Richtung A verlaufenden Sacklochs gebildet, wobei die beiden Aussparungen 50,52 im Montagezustand miteinander fluchten. Die zweite axiale Aussparung 52 ist in die Stirnseite der Antriebswelle 6 eingebracht, die im Montagezustand an der ersten Stufe 32 der Motorwelle 22 anliegt.

In die erste Stufe 32 der Motorwelle 22 ist die erste axiale Aussparung 50 eingebracht, wobei sich die ersten axialen Aussparungen 50 in tangentialer Richtung zwischen jeweils zwei benachbarten Rasthaken 30 befinden. Bei Montage des Antriebs 2 werden zunächst die Stifte 48 in die jeweils korrespondierende erste axiale Aussparung 50 eingeführt. Nachfolgend wird die Motorwelle 22 über die Antriebswelle 6 geschoben, bis jeder der Stifte 48 der jeweils korrespondierenden zweiten axialen Aussparung 52 eingeführt wird. Hieran anschließend wird jeder der Rasthaken 30 mit der korrespondierenden Rastnocke 28 verrastet, wobei die Stifte 48 weiter in die zweite Aussparung 52 eingeführt werden. Nach Verrastung der Rasthaken 30 mit den Rastnocken 28 liegt jeder der Stifte 28 im Wesentlichen zur Hälfte in der ersten axialen Aussparung 50 und zur anderen Hälfte in der jeweils korrespondierenden zweiten axialen Aussparung 52 ein. Folglich sind die Stifte 48 zwischen der Motorwelle 22 und der Antriebswelle 6 positioniert. Mittels des zweiten Verbindungselements 46 wird eine Rotationsbewegung der Motorwelle 22 auf die Antriebswelle 6 übertragen. Hierbei dienen die Stifte 48 sowie die jeweiligen Aussparungen 50,52 im Wesentlichen einem Drehmomentübertrag. Mittels des ersten Verbindungselements 26 wird sichergestellt, dass die Motorwelle 22 und die Antriebswelle 6 in axialer Richtung A aneinander anliegen, sodass die Stifte 48 stets im Eingriff mit den beiden zugeordneten Aussparungen 50,52 verbleiben.
Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen, der durch die beigefügte Patentansprüche definiert wird.

In der folgenden Beschreibung kann der Ausdruck "Ausführungsform", bzw. "Ausführungsbeispiel" für Gegenstände benutzt worden sein, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

### Bezugszeichenliste

- 2: Antrieb
- 4: angetriebenes Bauteil
- 6: Antriebswelle
- 8: Lager
- 10: Rotationsachse
- 12: Elektromotor
- 14: Stator
- 16: Elektronik
- 18: Prozessteuerung
- 20: Rotor
- 22: Motorwelle
- 24: Montageplatte
- 26: erstes Verbindungselement
- 28: Rastnocke
- 30: Rasthaken
- 32: erste Stufe
- 34: zweite Stufe
- 36: Hakenkopf
- 38: zweite Rastfläche
- 40: erste Rastfläche
- 42: Nut
- 44: Schlitz
- 46: zweites Verbindungselement
- 48: Stift
- 50: erste axiale Aussparung
- 52: zweite axiale Aussparung

- A: axiale Richtung
- a: Winkel

## Patentansprüche

1. Antrieb (2), insbesondere einer Industrieanlage, mit einem Elektromotor (12), und mit einem angetriebenen Bauteil (4), das eine Antriebswelle (6) aufweist, die mit einer Motorwelle (22) eines Rotors (20) des Elektromotors (12) gekoppelt ist, wobei die Motorwelle (22) und die Antriebswelle (6) mittels eines ersten Verbindungselements (26) gegen eine Bewegung in axialer Richtung (A) relativ zueinander gesichert sind, und wobei zwischen der Motorwelle (22) und der Antriebswelle (6) ein zweites Verbindungselement (46) zur Übertragung einer Rotationsbewegung der Motorwelle (22) um eine Rotationsachse (10) auf die Antriebswelle (6) angeordnet ist, wobei mittels des ersten Verbindungselements (26) die Motorwelle (22) mit der Antriebswelle (6) verrastet ist, wobei das erste Verbindungselement (26) eine Rastnocke (28) mit einer ersten Rastfläche (40) und einen Rasthaken (30) mit einem eine zweite Rastfläche (38) umfassenden Hakenkopf (36) aufweist, an dem die Rastnocke (28) anliegt, wobei die Motorwelle (22) in axialer Richtung (A) freiendseitig eine erste Stufe (32) zur Ausbildung des Rasthakens (30) aufweist, wobei die Antriebswelle (6) in axialer Richtung (A) freiendseitig eine zweite Stufe (34) aufweist, an der die Rastnocke (28) angebunden ist, wobei die Rastnocke (28) an der zweiten Stufe (34) angeformt ist.

2. Antrieb (2) nach Anspruch 1,
**dadurch gekennzeichnet,**
**dass** die Motorwelle (22) und/oder die Antriebswelle (6) eine Hohlwelle ist.

3. Antrieb (2) nach Anspruch 1 oder 2,
**dadurch gekennzeichnet,**
**dass** der Rasthaken (30) einen größeren Abstand zur Rotationsachse (10) aufweist als die Rastnocke (28).

4. Antrieb (2) nach einem der Ansprüche 1 bis 3,
**dadurch gekennzeichnet**,
dassdie Motörwelle (22) eine tangential verlaufende Nut (42) aufweist.

5. Antrieb (2) nach einem der Ansprüche 1 bis 4,
**dadurch gekennzeichnet,**
**dass** der Rasthaken (30) freiendseitig an der Antriebswelle (6) anliegt.

6. Antrieb (2) nach einem der Ansprüche 1 bis 5,
**dadurch gekennzeichnet,**
**dass** die erste Rastfläche (40) bezüglich der zweiten Rastfläche (38) geneigt ist.

7. Antrieb (2) nach einem der Ansprüche 1 bis 6,
**dadurch gekennzeichnet,**
**dass** der Elektromotor (12) lagerlos ist.

8. Antrieb (2) nach einem der Ansprüche 1 bis 7,
**dadurch gekennzeichnet,**
**dass** das zweite Verbindungselement (46) einen Stift (48) umfasst, der teilweise in einer ersten axialen Aussparung (50) der Motorwelle (22) und teilweise in einer zweiten axialen Aussparung (52) der Antriebswelle (6) angeordnet ist.

## Claims

1. Drive (2), in particular of an industrial plant, having an electric motor (12), and having a driven component (4) which has a drive shaft (6) which is coupled to a motor shaft (22) of a rotor (20) of the electric motor (12), the motor shaft (22) and the drive shaft (6) being secured against a movement in the axial direction (A) relative to one another by means of a first connecting element (26), and a second connecting element (46) for transmitting a rotational movement of the motor shaft (22) about a rotational axis (10) to the drive shaft (6) being arranged between the motor shaft (22) and the drive shaft (6), the motor shaft (22) being latched to the drive shaft (6) by means of the first connecting element (26), the first connecting element (26) having a latching cam (28) with a first latching face (40) and a latching hook (30) with a hook head (36) which comprises a second latching face (38), against which the latching cam (28) bears, the motor shaft (22) having a first step (32) on the free end side in the axial direction (A) for the configuration of the latching hook (30), the drive shaft (6) having a second step (34) on the free end side in the axial direction (A), to which second step (34) the latching cam (28) is attached, the latching cam (28) being integrally formed on the second step (34).

2. Drive (2) according to Claim 1, **characterized in that** the motor shaft (22) and/or the drive shaft (6) are/is a hollow shaft.

3. Drive (2) according to Claim 1 or 2, **characterized in that** the latching hook (30) is at a greater spacing from the rotational axis (10) than the latching cam (28) .

4. Drive (2) according to one of Claims 1 to 3, **characterized in that** the motor shaft (22) has a tangentially running groove (42).

5. Drive (2) according to one of Claims 1 to 4, **characterized in that** the latching hook (30) bears on the free end side against the drive shaft (6).

6. Drive (2) according to one of Claims 1 to 5, **characterized in that** the first latching face (40) is inclined with regard to the second latching face (38).

7. Drive (2) according to one of Claims 1 to 6, **characterized in that** the electric motor (12) is bearingless.

8. Drive (2) according to one of Claims 1 to 7, **characterized in that** the second connecting element (46) comprises a pin (48) which is arranged partially in a first axial cut-out (50) of the motor shaft (22) and partially in a second axial cut-out (52) of the drive shaft (6).

## Revendications

1. Entraînement (2), en particulier d'une installation industrielle, comprenant un moteur électrique (12) et un composant entraîné (4) qui comprend un arbre d'entraînement (6) qui est accouplé à un arbre de moteur (22) d'un rotor (20) du moteur électrique (12), l'arbre de moteur (22) et l'arbre d'entraînement (6) étant fixés l'un par rapport à l'autre, au moyen d'un premier élément de liaison (26), de manière à empêcher un mouvement dans la direction axiale (A), et un deuxième élément de liaison (46) servant à transmettre un mouvement rotatif de l'arbre de moteur (22) autour d'un axe de rotation (10) à l'arbre d'entraînement (6) étant disposé entre l'arbre de moteur (22) et l'arbre d'entraînement (6), l'arbre de moteur (22) étant encliqueté avec l'arbre d'entraînement (6) au moyen du premier élément de liaison (26), le premier élément de liaison (26) comprenant un ergot d'encliquetage (28) doté d'une première surface d'encliquetage (40) et un crochet d'encliquetage (30) doté d'une tête de crochet (36) comportant une deuxième surface d'encliquetage (38), tête de crochet contre laquelle s'appuie l'ergot d'encliquetage (28), l'arbre de moteur (22) comprenant, du côté de l'extrémité libre dans la direction axiale (A), un premier gradin (32) servant à former le crochet d'encliquetage (30), l'arbre d'entraînement (6) comprenant, du côté de l'extrémité libre dans la direction axiale (A), un deuxième gradin (34) auquel l'ergot d'encliquetage (28) est relié, l'ergot d'encliquetage (28) étant formé sur le deuxième gradin (34).

2. Entraînement (2) selon la revendication 1, **caractérisé en ce que**
l'arbre de moteur (22) et/ou l'arbre d'entraînement (6) est/sont un arbre creux.

3. Entraînement (2) selon la revendication 1 ou 2, **caractérisé en ce que**
le crochet d'encliquetage (30) présente une plus grande distance à l'axe de rotation (10) que l'ergot d'encliquetage (28).

4. Entraînement (2) selon l'une quelconque des revendications 1 à 3,
**caractérisé en ce que**
l'arbre de moteur (22) comprend une rainure (42) s'étendant de manière tangentielle.

5. Entraînement (2) selon l'une quelconque des revendications 1 à 4,
**caractérisé en ce que**
le crochet d'encliquetage (30) s'appuie, du côté de l'extrémité libre, contre l'arbre d'entraînement (6).

6. Entraînement (2) selon l'une quelconque des revendications 1 à 5,
**caractérisé en ce que**
la première surface d'encliquetage (40) est inclinée par rapport à la deuxième surface d'encliquetage (38).

7. Entraînement (2) selon l'une quelconque des revendications 1 à 6,
**caractérisé en ce que**
le moteur électrique (12) est sans palier.

8. Entraînement (2) selon l'une quelconque des revendications 1 à 7,
caractérisé en en ce que
le deuxième élément de liaison (46) comporte une goupille (48) qui est disposée partiellement dans un premier évidement axial (50) de l'arbre de moteur (22) et partiellement dans un deuxième évidement axial (52) de l'arbre d'entraînement (6) .
